# EUROPÄISCHE PATENTSCHRIFT

(11) **EP 0 968 900 B1**
(45) Veröffentlichungstag und Bekanntmachung des Hinweises auf die Patenterteilung: **19.09.2001**
(21) Anmeldenummer: 98101451.7
(22) Anmeldetag: 27.02.1998
(51) Int. Cl.: B62D 1/16

(54) **Dichtungsanordnung fuer durch Oeffnungen in Karosseriewandungen hindurchgefuehrte Bauteile**
Sealing device for components passing through openings in panels of vehicle bodies
Joint d'étanchéité pour composants passant à travers des ouvertures dans des parois de carrosseries

(43) Veröffentlichungstag der Anmeldung: 05.01.2000
(73) Patentinhaber: Ford Global Technologies, Inc., A subsidiary of Ford Motor Company, Dearborn, Michigan 48126 (US)
(72) Erfinder: Esser, Frank, 50171 Kerpen (DE); Schoenmakers, Rafael, 3920 Lommel (BE)
(74) Vertreter: Messulam, Alec Moses

(56) Entgegenhaltungen:
- EP-A- 0 576 935
- EP-A- 0 733 558
- DE-A- 3 601 044
- DE-C- 4 040 039
- DE-U- 8 810 952
- GB-A- 2 078 314

## Beschreibung

Die Erfindung bezieht sich auf eine Dichtungsanordnung für durch Öffnungen in Karosseriewandungen hindurchgeführte Bauteile, der im Oberbegriff des Patentanspruches 1 erläuterten Art.

Aus der DE 94 05 633 U1 ist ein Dichtungselement für die Durchführung der Lenksäule durch die Spritzwand eines Kraftfahrzeuges bekannt, bei der ein hülsenförmiger Kunststoffkörper aus gummielastischem Material über beidseitige Anschlußbereich in Form einer Lenksäulenbuchse und in Form eines in die Spritzwandöffnung verankerbaren Rahmenteiles mit der Lenksäule bzw. der Karosseriewandung abdichtend zusammenwirkt.

Das bekannt Dichtelement weist hierbei den Nachteil auf, daß einerseits die Montage des Rahmenteiles in der Öffnung in der Spritzwand eine gewisse handwerkliche Fertigkeit bei dem notwendigen Montagevorgang erfordert und die an der Lenksäule angreifende Lenksäulenbuchse bringt den Nachteil mit sich, daß hierdurch ein Reibungsmoment auf die Lenksäule aufgebracht wird, welches das Lenkungsgefühl negativ beeinflußt und das unter ungünstigen Reibungsverhältnissen zu Knarr- oder Quietschgeräuschen führen kann.

Aus der EP 0576935 ist eine Abdeckeinheit für Lenksäulendurchführungen durch eine Kraftfahrzeug-Trennwand nach dem Oberbegriff des Anspruchs 1 bekannt, die aus einer auf der Kabinenrückseite positionierbaren Abdeckplatte mit einer zur Fahrerkabine gerichteten, über der Lenksäule mit geringem Spiel aufschiebbaren Dichtungshülse sowie einer von der Kabinenseite aus montierbaren Gegenplatte mit einem auf die Dichtungshülse aufdrückbaren Befestigungsring besteht. Der Befestigungsring ist am vorderen Rand mit nach innen vorstehenden, auffederbaren Rastzähnen versehen, die in entsprechend nach außen abstehenden Rastringen auf der Dichtungshülse verankerbar sind.

Wesentlicher Nachteil dieses Konzeptes ist es, daß die Gegenplatte mit dem Befestigungsring von der Kabinenseite aus auf die auf der Kabinenrückseite angeordnete Abdeckplatte gesteckt wird. Neben der erforderlichen Montagearbeit an der Kabinenrückseite ist also auch ein Zugriff des Monteurs von der Kabinenseite aus auf die Abdeckeinrichtung notwendig, wodurch die Montagezeit unnötig erhöht wird.

Die Aufgabe der Erfindung ist es, eine Dichtungsanordnung für durch Öffnungen in Karosseriewandungen hindurchgeführte Bauteile derart zu verbessern, daß der erforderliche hülsenförmige Kunststoffkörper nicht mehr in einem aufwendigen Montagevorgang in einer Öffnung der Karosseriewandung montiert werden muß und daß an dem hindurchzuführenden Bauteil keine Reibungsberührung auftritt, die bei ungünstigen Reibungsverhältnissen zu störenden Geräuschen führen könnte.

Gemäß der Erfindung wird diese Aufgabe gelöst, indem bei einer Dichtungsanordnung für durch Öffnungen in Karosseriewandungen hindurchgeführte Bauteile der im Oberbegriff des Patentanspruches 1 erläuterten Art die im Kennzeichenteil des Patentanspruches 1 aufgezeigten Merkmale angewendet werden.

Dadurch, daß der Kunststoffkörper aus zähhartem Material geformt und mit seinem einen Anschlußbereich an einer mit dem hindurchzuführenden Bauteil zusammenarbeitenden ortsfesten Baugruppe verbunden ist und der andere Anschlußbereich als Flansch mit einer großvolumigen Schaumstoffplatte ausgebildet ist, die unter elastischer Vorspannung an der Karosseriewandung abdichtend anliegt und die an der Karosseriewandung anliegende Oberfläche des Schaumstoffwulstes mit einer bei Raumtemperatur gleitfähigen und bei einer erstmaligen Erwärmung eine Klebeverbindung zur Karossierwandung herstellenden Beschichtung versehen ist, wird eine Dichtungsanordnung bereitgestellt, die einfach an der ortsfesten Baugruppe montiert werden kann und bei dem darauffolgenden Zusammenfügen von z.B. Fahrgestellgruppe und Karosseriegruppe keine weitere Montagearbeit erfordert, sondern zunächst unter elastischer Vorspannung an der Karosseriewandung abdichtet.

Wird das Kraftfahrzeug in Betrieb genommen und erwärmt sich die Karosseriewandung auf eine vorbestimmte Temperatur, so geht die bei Raumtemperatur gleitfähige Beschichtung der Schaumstoffplatte in eine Klebeverbindung über, die während der nachfolgenden Lebensdauer des Kraftfahrzeuges aufrecht erhalten bleibt. Die Temperatur zum Aufschmelzen der Gleitschicht steigt mit jedem Erwärmungszyklus an, um so ein späteres Lösen bei stärkerer Erwärmung zu verhindern.

Damit wird sichergestellt, daß auch bei während der Lebenszeit des Kraftfahrzeuges nachlassender elastischer Vorspannung des Schaumstoffmaterials für eine sichere Abdichtung des durch die Öffnung in der Karosseriewandung hindurchgeführten Bauteiles gesorgt wird.

Die Erfindung wird anhand eines in den Zeichnungen gezeigten Ausführungsbeispieles näher erläutert. Es zeigt:
- Fig. 1: eine Schrägrißdarstellung einer erfindungsgemäßen Dichtungsanordnung im Falle einer durch die Spritzwand eines Kraftfahrzeuges hindurchzuführenden Lenksäule;
- Fig. 2: eine Ansicht des hülsenförmigen Kunststoffkörpers mit der Schaumstoffplatte aus Richtung der Spritzwand;
- Fig. 3: einen Schnitt entlang der Linie III-III in Fig. 2 und
- Fig. 4: einen Schnitt entlang der Linie IV-IV in Fig. 2.

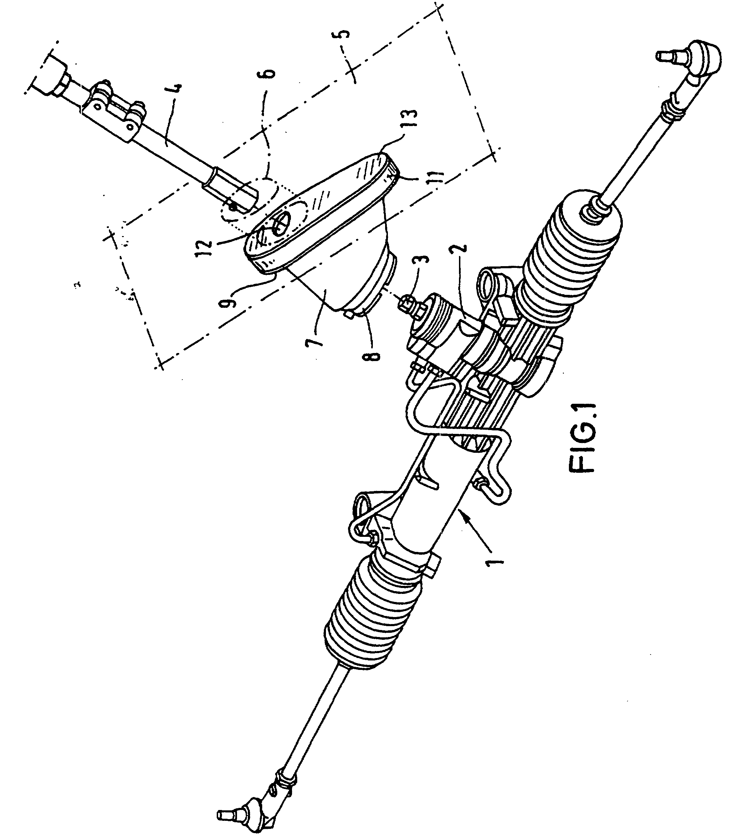

In Fig. 1 ist eine Dichtungsanordnung für eine durch eine Öffnung in einer Spritzwand-Karosseriewandung eines Kraftfahrzeuges hindurchgeführten Lenksäule gezeigt.

Eine ortsfeste Baugruppe, z. B. in Form einer servounterstützten Zahnstangenlenkung ist hierbei mit 1 bezeichnet und weist ein Ritzelgehäuse 2 auf, aus dem das Anschlußende 3 der Ritzelwelle der Lenkung vorragt, mit dem die Lenkwelle 4 der Lenksäulenanordnung, die an ihrem anderen Ende das Lenkrad (nicht gezeigt) trägt, bei der Montage der Fahrgestellgruppe mit der Karosseriegruppe, verbunden werden muß.

Die Lenkwelle 4 muß hierbei durch eine in Fig. 1 nur teilweise in Strich-Punkt-Linien angedeutete Spritzwand-Karosseriewandung 5 mit einer Öffnung 6 hindurchgeführt werden.

Zur Abdichtung des Fahrgastraumes zu der unterhalb der Karosseriegruppe liegenden Fahrgestellgruppe ist eine Dichtungsanordnung erforderlich, die in Form eines hülsenförmigen Kunststoffkörpers 7 aus zähhartem Material ausgebildet ist. Der Kunststoffkörper 7 weist zwei Anschlußbereiche 8 und 9 auf, wobei der eine Anschlußbereich 8 nach Art einer Manschette ausgebildet ist, die das Ritzelgehäuse 2 unter Zwischenschaltung eines elastischen Zwischenringes 10 umfaßt und dort entweder über Rasteinrichtungen oder über Spannbänder (nicht gezeigt) festgelegt wird.

Der andere Anschlußbereich 9 ist als ein im wesentlichen ebener Flansch mit einer großvolumigen Schaumstoffplatte 11 ausgebildet, die an der der Öffnung 6 umliegenden Spritzwand-Karossierwandung 5 unter elastischer Vorspannung anliegt. Die Schaumstoffplatte 11 weist eine Durchtrittsöffnung 12 für die Lenkwelle 4 auf.

Die an der Karosseriewandung 5 anliegende Oberfläche der Schaumstoffplatte 11 ist hierbei gemäß der Erfindung mit einer Beschichtung 13 versehen, die bei Raumtemperatur gleitfähig ist und somit bei der Montageoperation des Zusammenführen der Fahrgestellgruppe mit der Karosseriegruppe keine Schwierigkeiten bei den hierbei auftretenden Gleitbewegungen macht.

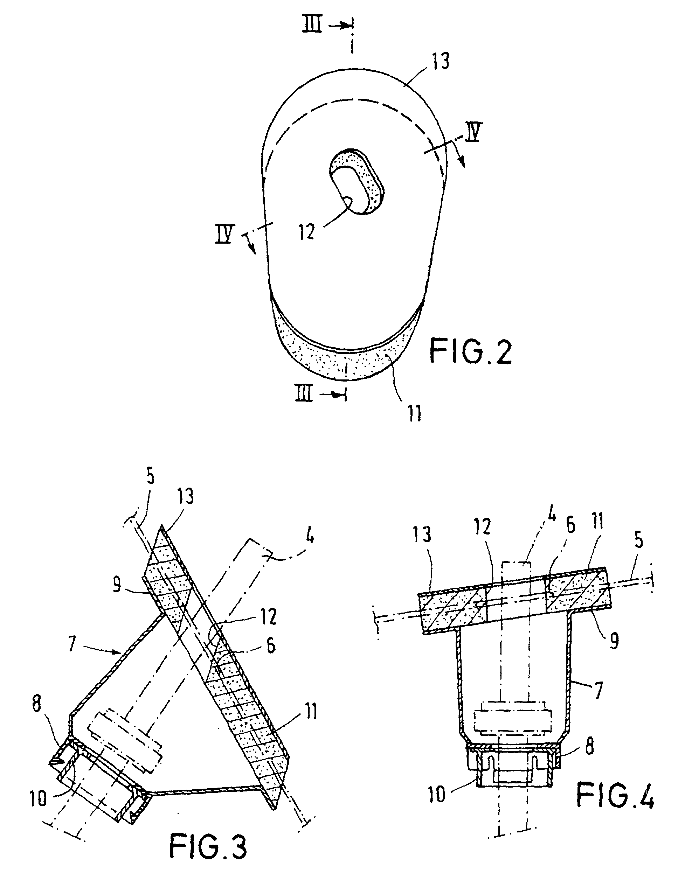

Die anfängliche Abdichtung erfolgt über die elastische Vorspannung der Schaumstoffplatte 11, die in den Fig. 3 und 4 in ihrer entspannten Lage dargestellt ist und bei der Montage bis etwa zur Hälfte ihrer Dicke komprimiert wird.

Um sicherzustellen, daß bei nachlassender Vorspannung des Schaumstoffmaterials eine sichere Abdichtung gewährleistet bleibt, ist die Beschichtung 13 der Schaumstoffplatte 11 derart ausgelegt, daß sie bei einer erstmaligen Erwärmung auf eine Temperatur, wie sie bei einem normalen Betrieb des Kraftfahrzeuges im Motorraumbereich auftritt, klebfähig wird und eine Klebeverbindung zur Karosseriewandung 5 herstellt, die nachfolgend über die Lebenszeit des Kraftfahrzeuges aufrechterhalten bleibt. Die Temperatur zum Aufschmelzen der Gleitschicht steigt mit jedem Erwärmungszyklus an, um ein späteres Lösen bei stärkerer Erwärmung zu verhindern.

Die erfindungsgemäße Dichtungsanordnung wurde in Zusammenhang mit den Zeichnungen für eine durch die Spritzwand-Karosseriewandung geführte Lenkwelle eines Kraftfahrzeuges aufgezeigt, es ist jedoch selbstverständlich auch möglich, die erfindungsgemäße Dichtungsanordnung für andere Anwendungsgebiete innerhalb der Karosserie eines Kraftfahrzeuges anzuwenden, sofern eine ortsfeste Baugruppe vorhanden ist, die den ggf. hülsenförmigen Kunststoffkörper aufnimmt und dessen Schaumstoffplatte mit elastischer Vorspannung an die abzudichtende Karosseriewandung anlegt, wobei die zur Sicherstellung der über die Lebenszeit des Kraftfahrzeuges wirksamen Abdichtung erforderlichen Wärmeeinwirkung zur Herstellung der dauernden Klebeverbindung auch durch Wärmezufuhr z.B. in Form von einer örtlich begrenzten, eine bestimmte Zeitspanne umfassenden Bestrahlung mit Infrarotlicht erfolgen kann.

## Patentansprüche

1. Dichtungsanordnung für durch Öffnungen in Karosseriewandungen hindurchgeführte Bauteile, mit einem hülsenförmigen Kunststoffkörper (7), der über beidseitige Anschlußbereiche (8 und 9) mit dem einen Bauteil bzw. einer dazugehörigen Baugruppe und der Karosseriewandung abdichtend zusammenwirkt, wobei der Kunststoffkörper (7) aus zähhartem Material geformt und mit seinem einen Anschlußbereich (8) mit einer mit dem hindurchzuführenden Bauteil (4) zusammenarbeitenden ortsfesten Baugruppe (2) verbunden ist, und der andere Anschlußbereich (9) als Flansch mit einer großvolumigen Schaumstoffplatte (11) ausgebildet ist, die unter elastischer Vorspannung an der Karosseriewandung (5) abdichtend anliegt,
**dadurch gekennzeichnet, daß**
die an der Karosseriewandung (5) anliegende Oberfläche der Schaumstoffplatte (11) mit einer bei Raumtemperatur gleitfähigen und bei einer erstmaligen Erwärmung eine Klebeverbindung herstellenden Beschichtung (13) versehen ist.

2. Dichtungsanordnung nach Anspruch 1,
**dadurch gekennzeichnet, daß**
- der Kunststoffkörper (7) aus zähhartem Material an seinem Anschlußbereich (8) über einen elastischen Zwischenring (10) an der einen Baugruppe (2) abgestützt ist.

3. Dichtungsanordnung nach den Ansprüchen 1 und 2,
**dadurch gekennzeichnet, daß**
- die erstmalige Erwärmung der Beschichtung (13) der Schaumstoffplatte (11) durch eine während des normalen Betriebes auftretenden Erwärmung bewirkt wird.

4. Dichtungsanspruch nach den Ansprüchen 1 und 2,
**dadurch gekennzeichnet, daß**
- die erstmalige Erwärmung der Beschichtung (11) der Schaumstoffplatte (11) durch eine gezielte örtlich und zeitlich begrenzte Bestrahlung mit Infrarotlicht bewirkt wird.

## Claims

1. Sealing device for components passing through openings in panels of vehicle bodies, with a sleeve-form synthetic material body (7), which over both-side connection areas (8 and 9) works in association with a component or a unit belonging thereto and the opening in the vehicle body in a sealing way, wherein the synthetic material body (7) is formed from tough, viscous material and with one connection area (8) is connected with a stationary unit (2) working in association with the component (4) to be passed through, and the other connection area (9) is formed as a flange with a large-volume foam plate (11), which lies against the body panel (5) in a sealing way with elastic pre-stressing,
**characterised in that**
the upper surface of the foam plate (11) lying against the body panel (5) is provided with a coating (13) which has good slip characteristics at room temperature and which produces an adhesive connection during initial heating.

2. Sealing device according to Claim 1
**characterised in that**
- the synthetic material body (7) made from tough, viscous material is supported on its connection area (8) via an elastic intermediate ring (10) on one unit (2).

3. Sealing device according to Claims 1 and 2
**characterised in that**
- the initial heating of the coating (13) of the foam plate (11) is effected through heating occurring during normal operation.

4. Sealing device according to Claims 1 and 2
**characterised in that**
- the initial heating of the coating (11) of the foam plate (11) is effected through geographically targeted and time-limited radiation with infra-red light.

## Revendications

1. Joint d'étanchéité pour composants passant à travers des ouvertures dans des parois de carrosseries, muni d'un corps en matière plastique (7) configuré en une douille et coopérant de manière étanche, par l'intermédiaire de zones de rattachement (8 et 9) situées de part et d'autre, avec la paroi de carrossage et avec l'un des composants ou, respectivement, avec un groupe structurel associé, ledit corps en matière plastique (7) étant moulé en un matériau à dureté visqueuse et étant relié, par l'une (8) de ses zones de rattachement, à un groupe structurel fixe (2) coopérant avec le composant (4) dont le passage doit être assuré, et l'autre zone de rattachement (9) étant réalisée comme une bride pourvue d'une plaque en mousse (11) de grand volume appliquée contre la paroi de carrossage (5), avec précontrainte élastique, en exerçant un effet d'étanchement,
**caractérisé par** le fait que
la surface de la plaque en mousse (11), portant contre la paroi de carrossage (5), est munie d'un revêtement (13) apte au glissement à température ambiante, et établissant une liaison collée lors d'un réchauffage initial.

2. Joint d'étanchéité selon la revendication 1,
**caractérisé par** le fait que
- le corps (7) en une matière plastique à dureté visqueuse prend appui contre l'un (2) des groupes structurels, dans sa zone de rattachement (8), par l'intermédiaire d'une bague intercalaire élastique (10).

3. Joint d'étanchéité selon les revendications 1 et 2,
**caractérisé par** le fait que
- le réchauffage initial du revêtement (13) de la plaque en mousse (11) est provoqué par un réchauffage se produisant en service normal.

4. Joint d'étanchéité selon les revendications 1 et 2,
**caractérisé par** le fait que
- le réchauffage initial du revêtement (11) de la plaque en mousse (11) est provoqué par une exposition délibérée à la lumière infrarouge, limitée dans l'espace et dans le temps.
